# EUROPEAN PATENT APPLICATION

(11) **EP 1 747 737 A1**
(43) Date of publication of application: **31.01.2007**
(21) Application number: 06253883.0
(22) Date of filing: 25.07.2006
(51) Int. Cl.: A47J 31/057, A47J 31/46, A47J 31/50, A47G 23/04

(54) **Beverage maker**

(30) Priority: 25.07.2005 JP 2005214721; 05.04.2006 JP 2006104379
(71) Applicant: IZUMI PRODUCTS COMPANY, Matsumoto, Nagano (JP)
(72) Inventor: Takizawa, Hiroyuki, Nagano (JP); Furuhata, Shinichi, Nagano (JP); Kashiwabara, Shuhei, Nagano (JP); Izumi, Yukio, Nagano (JP); Ozawa, Tetsuya, Nagano (JP)
(74) Representative: Jenkins, Peter David

(57) **Abstract**

A beverage maker including an extract liquid receptacle (52A), which is for storing therein extract liquid extracted by beverage extraction section (50 and 76), and a cooling reservoir (52B), which is for accommodating therein cooling material that contacts the extract liquid with the tank wall of the extract liquid receptacle (52A) in between, so that the extract liquid is cooled by the cooling reservoir (52B); and in this beverage maker, the cooling material is a combination of a sealed body (53), in which a cooling agent is sealed, and a fluid material (such as water); and this sealed body (53) is cooled and repeatedly used by itself separately from the fluid material.

## Description

### BACKGROUND OF THE INVENTION

### 1. Field of the Invention

The present invention relates to a beverage maker for cooling a beverage, such as hot coffee extracted using coffee powder, with a cooling material.

### 2. Description of the Related Art

Coffee makers, which use so-called regular coffee, of a drip type in which hot water at high temperature is poured into a coffee funnel into which coffee powder has been placed, the coffee is extracted, and the dripped coffee liquid is collected, such as a drip type that uses a paper filter, for example, are commonly known. Iced coffee extraction methods for cooling coffee (hot coffee liquid) extracted in that way with ice are also commonly known.

Japanese Patent Application Laid-Open (Kokai) No. S61-179115 and Japanese Utility Model Application Laid-Open (Kokai) No. S59-7732 disclose coffee makers in which hot water at high temperature resulting from heating water of a water reservoir with a heater is poured into a chamber (coffee filter) into which coffee powder has been placed, and the coffee liquid at high temperature which drips from the chamber is passed through the interior of an ice chamber wherein ice has been placed and collected in a decanter placed underneath. In other words, these coffee makers cool high-temperature coffee liquid by pouring it over ice.

Japanese Patent Application Laid-Open (Kokai) 2005-143702 discloses a coffee maker makes it possible to select between a hot coffee extraction mode (hot coffee extraction style) and an iced coffee extraction mode (iced coffee extraction style). In the iced coffee extraction mode, the extracted hot coffee liquid is received in a coffee liquid receptacle, and this is made into iced coffee by cooling with ice water from the exterior of that coffee liquid receptacle. In this case, a cooling unit is used which surrounds the outer circumference of the coffee liquid receptacle (wall) with ice water of an ice water reservoir, and the coffee liquid is made to flow down into a jug by opening a discharge valve provided at the bottom of the coffee liquid receptacle.

Japanese Patent Application Laid-Open (Kokai) 2005-143702 further discloses a coffee maker in which a coffee funnel is detachably provided on the lower surface of the top housing of the main body unit, and this coffee funnel is rotationally driven, so that coffee is extracted while rotating the coffee funnel. The coffee funnel in Japanese Patent Application Laid-Open (Kokai) 2005-143702 is used both in the iced coffee extraction mode and in the hot coffee extraction mode. As a result, in the hot coffee extraction mode, the hot coffee is received into the coffee liquid receptacle without placing ice in the ice water reservoir, and made to flow down into a jug.

In the coffee makers of Japanese Patent Application Laid-Open (Kokai) No. S61-179115 and Japanese Utility Model Application Laid-Open (Kokai) No. S59-7732, the high-temperature coffee liquid is cooled by bringing it directly into contact with ice; accordingly, the cooled coffee liquid will be weakened by the melt water from the ice. As a result, the flavor of the iced coffee will deteriorate, and the taste and odor of the ice will remain in the coffee liquid, which are problems.

In the beverage maker of Japanese Patent Application Laid-Open (Kokai) 2005-143702, coffee liquid extracted in the iced coffee extraction mode is not poured directly onto ice, so the coffee is not weakened by melted water from ice. However, there is a problem in that time and effort are necessary for preparation, placing ice and placing water into the ice water reservoir. In particular, for the ice used here, it is necessary to put water into ice-making trays or the like and to place the in a refrigerator, and also to take the ice from the ice-making trays, which is bothersome. Furthermore, because the temperature of ice water will not fall below 0°C, there are limitations also to how much the coffee cooling time can be shortened.

### BRIEF SUMMARY OF THE INVENTION

According, it is an object of the present invention, which was devised in view of such circumstances as described above, to provide a beverage maker in which, when cooling a beverage such as coffee extracted by beverage extraction means with a cooling material, cooling can be done quickly, without weakening the beverage with melted water from ice, and a richly flavorful and delicious chilled beverage can be made.

The above object is accomplished by a unique structure of the present invention for a beverage maker that includes an extract liquid receptacle for storing therein extract liquid extracted by beverage extraction means, and a cooling reservoir for accommodating therein a cooling material that contacts the extract liquid with a wall of the extract liquid receptacle in between, so that the extract liquid is cooled by the cooling reservoir; and in this structure:
the cooling material is comprised of a sealed body, in which a cooling agent is sealed, and a fluid material, and
the sealed body, by itself, can be cooled and repeatedly used separately from the fluid material.

In the above-described beverage maker of the present invention, a cooling material, which is comprised of a sealed body, in which a thermally insulating material (cooling agent) is sealed, and another fluid (or a fluid material) such as water, is placed in the cooling reservoir that is for cooling the extract liquid; and it is designed so that the sealed body can be taken out and cooled by itself (separately from the cooling unit wherein the extract liquid receptacle and cooling reservoir are integrated) in a refrigerator or the like. Accordingly, when the sealed body has been cooled beforehand in a refrigerator or the like and a chilled beverage is to be extracted, then the sealed body needs only to be placed together with the other fluid in the cooling reservoir. In other words, the sealed body can be cooled "as is" in a refrigerator or the like; and, after being cooled, placed "as is", together with the other fluid, in the cooling reservoir, so that preparation work is simple. Therefore, a richly flavorful chilled beverage can be made quickly, without the extract liquid being weakened by ice water. Also, with a use of a cooling material that attains a lower temperature than ice water, the extract liquid cooling time can be shortened.

In the present invention, the beverage extraction means are inclusive of one that extracts not only coffee but also Japanese tea, black tea, Chinese tea, and other beverages.

The sealed body used can be a gelatinous thermally insulating material (cooling agent) sealed in a flexible pouch (container) made of a resin, so that it is used by placing the pouch together with another fluid (a fluid material), such as water, in the cooling reservoir. For such a pouch-contained gelatinous cooling material, the "Horeizai" (thermally insulating material for cooling) manufactured by Trycompany Co., Ltd. (head office at 743 Shige, Numazu-city, Shizuoka, Japan), for example, can be used. The sealed body can also be one in which the gelatinous thermally insulating material (cooling agent) is sealed in a sealed container, made of a metal or resin or the like, which is not flexible, that is, which is inflexible.

With a structure that allows the cooling material inside the cooling reservoir to be stirred by a stirring member, the cooling effect of the extract liquid is further enhanced. The extract liquid inside the extract liquid receptacle may also be stirred by a stirring member. Both the cooling material and the extract liquid are stirred by the stirring members. It is preferable that these stirring members are moved (rotated) in the circumferential direction along the wall of the extract liquid receptacle in the interest of greater stirring effect. When the beverage extraction means are formed by a rotating extraction funnel, by attaching a stirring member to the extraction funnel for stirring at least one or other of the cooling liquid and extract liquid, the stirring vane can be driven using the rotational drive means of the extraction funnel. The stirring member can be formed by the sealed body.

The beverage extraction means can be an extract liquid receptacle instead of an extraction funnel. In this case, the extraction raw material such as green tea or black tea is placed in the extract liquid receptacle, and onto that is poured hot water. The extraction raw material used here includes such as has been placed in small bags, like tea bags, but loose tea leaves may also be used "as is". When loose tea leaves are used, it is preferable to use a filter that covers the discharge valve of the extract liquid receptacle.

### BRIEF DESCRIPTION OF THE SEVERAL VIEWS OF THE DRAWINGS

Figure 1 is a cross-sectional side view of a coffee maker according to one embodiment of the present invention for a beverage maker, the coffee maker being in an iced coffee extraction mode;
Figure 2 is a rear elevational view thereof;
Figure 3 is a top plan view thereof;
Figure 4 is a cross-sectional side view of the coffee maker in a hot coffee extraction mode;
Figure 5 is an exploded perspective view of the main body of the coffee maker;
Figure 6 is an exploded perspective view of the chuck, hot water receptacle and iced coffee extraction funnel;
Figure 7 is an exploded perspective view of the water reservoir;
Figure 8 is an exploded perspective view of the cooling unit and other parts;
Figure 9 is an overall conceptual illustration of the coffee maker according to the embodiment of the present invention;
Figure 10 is an enlarged cross-sectional view of the vicinity of the chuck of the drive shaft;
Figure 11 is a sectional view of the scatter;
Figures 12A through 12C show examples of the sealed bodies;
Figure 13 is a conceptual illustration of another type of the stirring vanes;
Figure 14 is a conceptual illustration of another embodiment of the present invention;
Figure 15 is a cross-sectional view of the stirring vane;
Figure 16 is a conceptual illustration of another embodiment of the present invention; and
Figure 17 is a conceptual illustration of another embodiment of the present invention.

### DETAILED DESCRIPTION OF THE INVENTION

### First embodiment

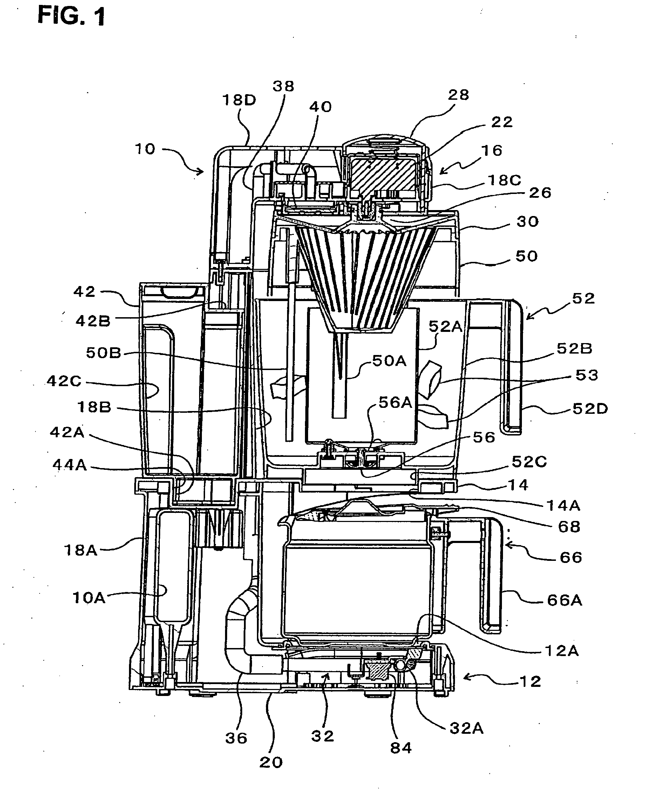

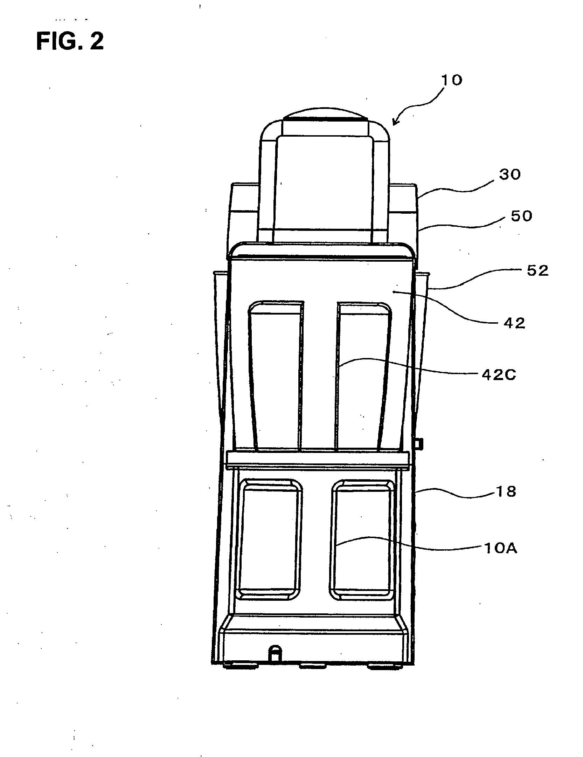

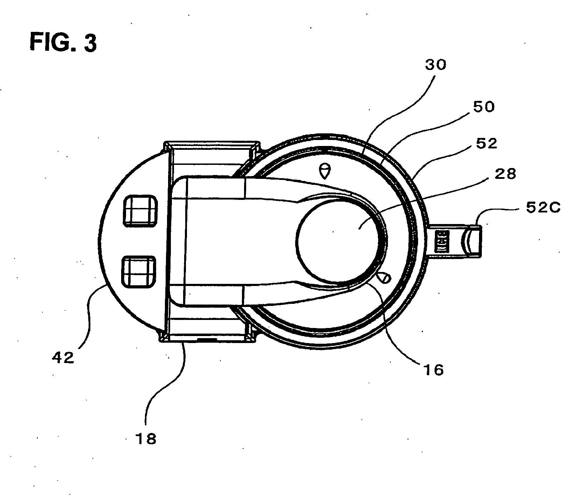

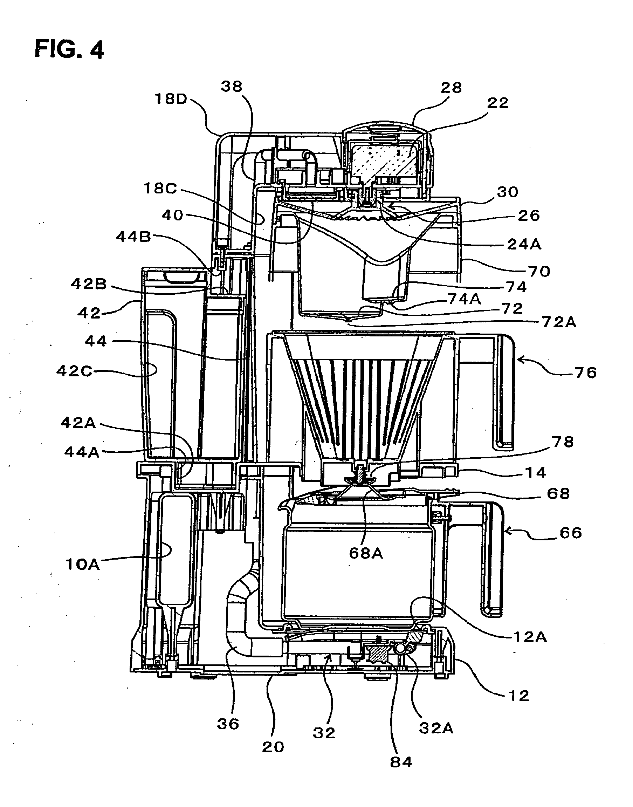

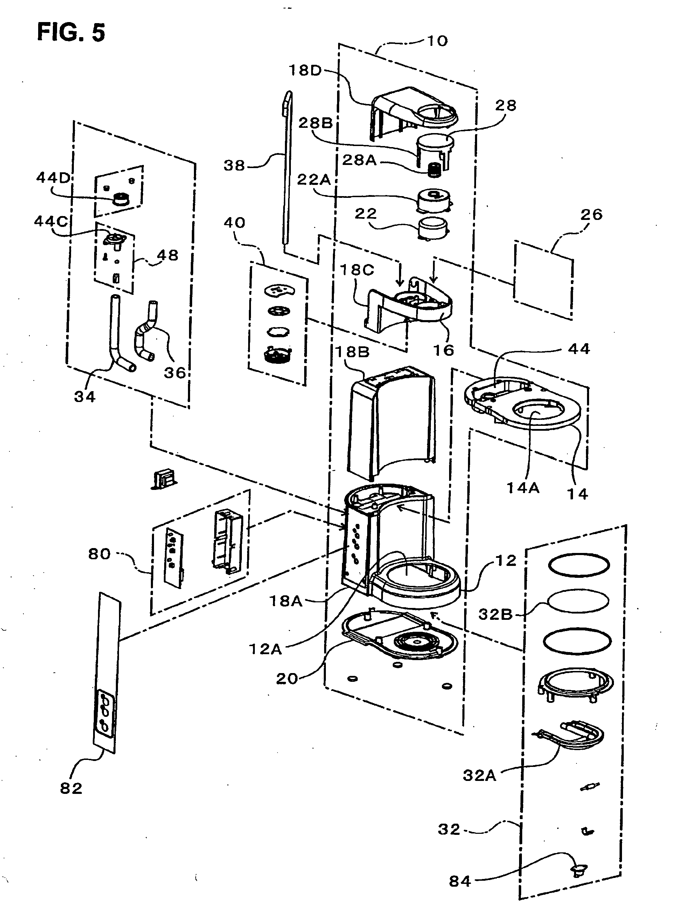

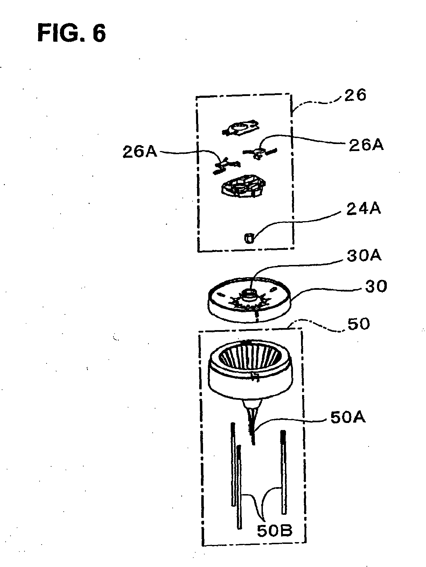

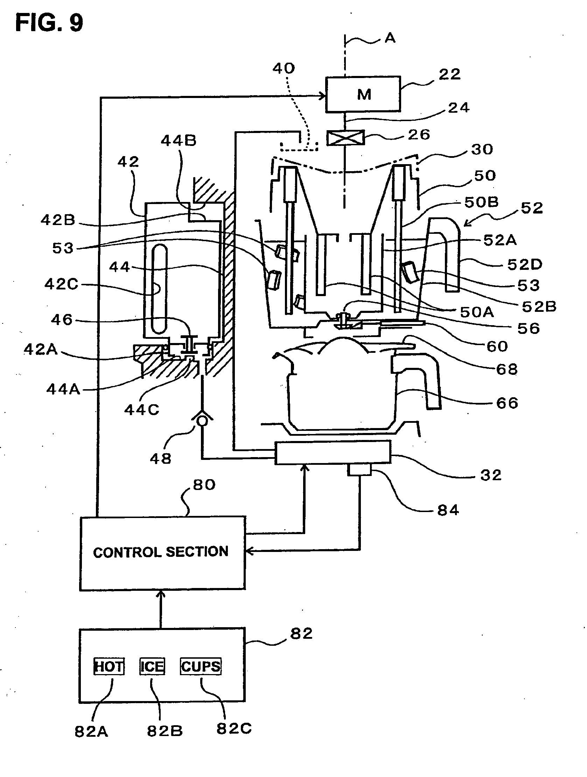

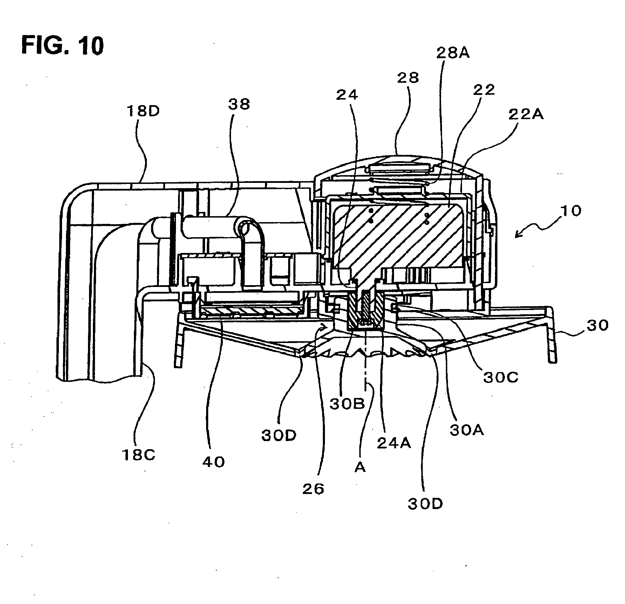

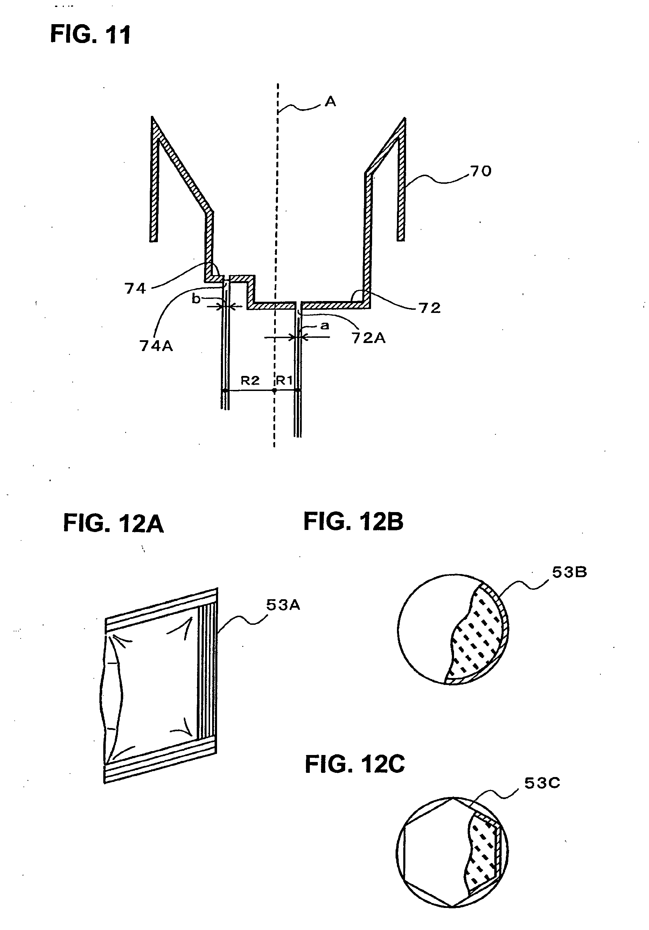

The shown embodiment is designed so that the coffee maker is capable of selectively extracting iced coffee and hot coffee, and the present invention is used in the iced coffee extraction mode. Figure 1 is a cross-sectional side view of the iced coffee extraction mode of the coffee maker of one embodiment of the present invention, Figure 2 is a rear elevational view thereof, and Figure 3 is a top view thereof. Figure 4 is a cross-sectional side view of the hot coffee extraction mode of the coffee maker. Figure 5 is an exploded perspective view of the parts of the main body unit of the coffee maker, Figures 6, 7, and 8 are exploded perspective views of the parts thereof, Figure 9 is an overall conceptual illustration, Figure 10 is an enlarged cross-sectional view of the vicinity of the chuck of a drive axis, and Figure 11 shows the cross-section of the scatter. Figures 12A, 12B and 12C show the examples of the sealed bodies.

In these Figures, the reference numeral 10 is the main body of the coffee maker that includes a base housing 12, a partition member 14, and a top housing 16 which are joined by a vertical stand 18. The vertical stand 18, moreover, as shown in Figure 5, is comprised of a lower case 18A, middle case 18B, and upper case 18C stacked and joined in the vertical direction. The base housing 12 is formed integrally in the lower case 18A, and a bottom plate 20 (see Figure 5) is secured to the bottom of the base housing 12.

One end of the partition member 14 is held sandwiched between the joining surfaces of the lower case 18A and the middle case 18B, while the other end of the partition member 14 extends out above the base housing 12.

The upper case 18C is formed so that one end thereof is secured to the upper surface of the middle case 18B, while the other end forms the top housing 16 that extends out above the partition member 14. The upper case 18C is covered from above by an upper case cover 18D, and between the upper case 18C and the upper case cover 18D, a reduced-speed motor 22 is provided.

The reduced-speed motor 22 has speed reduction gears (not shown in the drawings) inside, and the drive shaft 24 (see Figures 9 and 10), which is the output shaft of the reduced-speed motor 22, rotates at low speed. To this drive shaft 24, a hot water receptacle 30, described later, is mounted by a chuck 26 (see Figure 6), so that the hot water receptacle 30 is detachable with respect to the drive shaft 24. The chuck 26 is opened and closed by an attachment/detachment button 28 that is provided in the upper surface of the top housing 16. In other words, the reduced-speed motor 22 is circular, as viewed from above (see Figure 5), and the lid-shaped attachment/detachment button 28 surrounds the upper part of the motor cover 22A in which the reduced-speed motor 22 is provided.

The attachment/detachment button 28 returns upward by a coil spring 28A, and a plurality of projections 28B (see Figure 5) extending downward through the outside of the motor cover 22A are engaged with engagement pawls 26A and 26A of the chuck 26. When the attachment/detachment button 28 is pushed down, the projections 28B open the chuck 26 by opening the engagement pawls 26A and 26A to the outside (that is, they release the hot water receptacle 30). Furthermore, a hexagonal column-shaped bushing 24A is secured to the lower end of the drive shaft 24, while a hexagonal hole 30B (see Figure 10) into which the bushing 24A engages is formed in a hub unit 30A of the hot water receptacle 30. A ring-shaped channel 30C is formed in the outer circumference of that hub unit 30A. With this ring-shaped channel 30C, the semicircular'arch-shaped tips of the engagement pawls 26A and 26A are engaged and disengaged.

In the base housing 12 of the main body unit 10, an electric heater 32 is provided. The electric heater 32 heats water conducted from a water reservoir 42, described later, through a water hose 34 (see Figure 5) and makes high-temperature (boiled) hot water which is sent by a hot water hose 36 and hot water pipe 38 provided inside the vertical stand 18 to the top housing 16. The hot water (boiling water) is conducted, through an activated charcoal filter 40 provided adjacent to the drive shaft 24 in the lower surface of the top housing 16, to the above-described hot water receptacle 30.

As is clear from Figure 10, the lateral cross-section of the hot water receptacle 30 is substantially umbrella-shaped (or a substantially inverted umbrella-shaped). In the upper surface of the hot water receptacle 30, a plurality of ribs are formed in the radial direction; and hot water drip holes 30D are formed between the ribs. By suitably setting the distance from the hub unit 30A or the drip holes 30D or by varying the distance for each of the drip holes 30D, the position of the hot water drip relative to an iced coffee extraction funnel 50, described later, attached to the hot water receptacle 30 can be changed. In addition, when the scatter 70 that is used when extracting hot coffee, described later, is attached to the hot water receptacle 30 (see Figure 4), the hot water receptacle 30 conducts the hot water to the vicinity of the center of that scatter 70.

The heater 32 has (see Figure 5) a heating element 32A bent in substantially a U-shape around a metal pipe, and a circular metal plate 32B is attached to the upper surface of heating element 32A. The metal plate 32B is fitted from below into the circular opening 12A provided in the base housing 12. On the metal plate 32B that faces the opening 12A, a jug 66, described later, is placed; and, in the hot coffee extraction mode, the jug 66 is kept warm.

The water reservoir 42 will be described.

The water reservoir 42 is, as shown in Figures 1 and 4, mounted on the outer surface of the middle case 18B in the main body unit 10. In other words, as seen from Figure 3, the vertical stand 18 has a substantially semicircular shape, as viewed from above, and the water reservoir 42 is shaped so that the horizontal cross-section thereof divides a part of the column vertically, so that the circular arc-shaped outer surface thereof follows, substantially smoothly, the outer surface of the vertical stand 18.

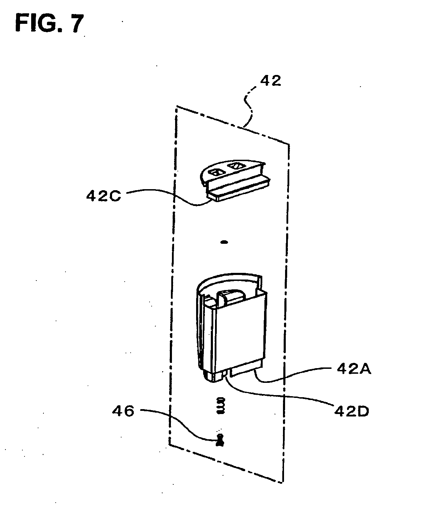

The water reservoir 42 is mounted in a water reservoir mounting chamber 44 that opens outwardly and is provided in the middle case 18B. In the partition member 14 (see Figure 4) that forms the bottom of this water reservoir mounting chamber 44, a concavity 44A, substantially trapezoidal as seen from above, is formed (see Figures 5 and 9); and in the bottom of the water reservoir 42, a convexity 42A, capable of engaging the concavity 44A substantially vertically from above, is formed (see Figure 7). In the upper surface of the water reservoir 42, moreover, a step 42B is formed on the inside (on the inmost side of the water reservoir mounting chamber 44), and the outside of the upper surface of the water reservoir 42 bulges out to the outside of the water reservoir mounting chamber 44. The upper surface of the water reservoir 42 is provided with a cover 42C (see Figure 7).

In the water reservoir mounting chamber 44, a step 44B is formed above the step 42B on the water reservoir 42 side so as to be separated by a certain distance, specifically by a distance slightly larger than the depth of the concavity 44A. Accordingly, when the water reservoir 42 is pulled upward from the mounted condition shown in Figures 1 and 4, the step 42B strikes the step 44B in the mounting chamber 44 from below; as a result, the upward movement thereof is limited. If, in this condition, the step 42B is released from the step 44B by way of tilting the top of the water reservoir mounting chamber 44 outward, then the water reservoir 42 can be pulled diagonally upward while causing the convexity 42A in the bottom to bulge out from the concavity 44A.

In the outer surface of the water reservoir 42 that is of a circular arc shape, as seen from above, a handle 42C is provided. In the lower case 18A, a handle 10A is provided so as to be positioned below the water reservoir 42.

In the convexity 42A which is in the bottom of the water reservoir 42, a water discharge valve 46 is provided (see Figures 7 and 9). This water discharge valve 46 is in a downwardly moved position by a coil spring so as to close the water discharge path; and when the water reservoir 42 is loaded in the water reservoir mounting chamber 44, the water discharge valve 46 is pushed upward by a projection 44C provided in the concavity 44A, thus opening the water discharge path. The opposing surfaces of the convexity 42A and concavity 44A are tightly sealed; accordingly, water from the water reservoir 42 will flow out only in a volume that will fill the inside of the concavity 44A and will never flow out to the outside of the concavity 44A.

In actuality, moreover, a tube 44D (see Figure 5), surrounding the projection 44C and opening upward, is formed in the water reservoir mounting chamber 44, in the bottom of the water reservoir 42, a tube 42D (see Figure 7) that engages that tube, on the inner diameter side thereof, is formed, and the engaging circumferential surfaces of the two tubes 44D and 42D are tightly sealed. Accordingly, when the water discharge valve 46 opens, the interior of a small void surrounded by the tubes 44D and 42D is filled with water.

As seen from Figure 5, to the bottom of the small void surrounded by the tubes 44D and 42D, the above-described water hose 34 is connected through a check valve 48. As a result, when water from the water reservoir 42 is conducted through the water discharge valve 46, check valve 48, and water pipe 34, into the heater 32 and heated to boiling by the heater 32, then it flows out through the hot water hose 36, hot water pipe 38, and filter 40 into the hot water receptacle 30. At such time, because of the presence of the check valve 48, the boiling water will not flow backward to the water reservoir 42. When the water level inside the heater 32 drops, water is supplied from the water reservoir 42, and the above action is continued.

The iced coffee extraction mode will be described below.

In this iced coffee extraction mode, as seen from Figure 1, an iced coffee extraction funnel 50 is attached to the hot water receptacle 30, and a cooling unit 52 is mounted on the partition member 14. The iced coffee extraction funnel 50, as shown in Figures 1 and 9, has a circular upper edge that is folded back to the outside, and the outer circumference thereof is engageable with the hot water receptacle 30. A joining structure can be effected, for example, such that, in the outer circumference of the upper edge of the funnel 50, a channel bent into a hook shape is formed so that the upper end thereof opens at the upper edge, and a projection that engages the hook-shaped channel is formed on the inner surface of the outer circumferential part of the hot water receptacle 30, so that, when the funnel 50 is pushed in and upward relative to the hot water receptacle 30 while causing the upper end portion of the hook-shaped channel to engage the projection, the projection will be caused, by slightly rotating the funnel 50, to engage in the interior (horizontal portion) of the hook-shaped channel.

As seen from Figures 6 and 9, in the bottom of the funnel 50 are secured with two vanes (stirring vanes) 50A for stirring the coffee liquid; and, from the vicinity of the upper edge of the funnel 50, three stirring rods 50B that constitute vanes for stirring ice water are secured. These stirring vanes 50A and stirring rods 50B extend vertically downward. The radius of rotation of the stirring vanes 50A is set to be smaller than the radius of rotation of the stirring rods 50B.

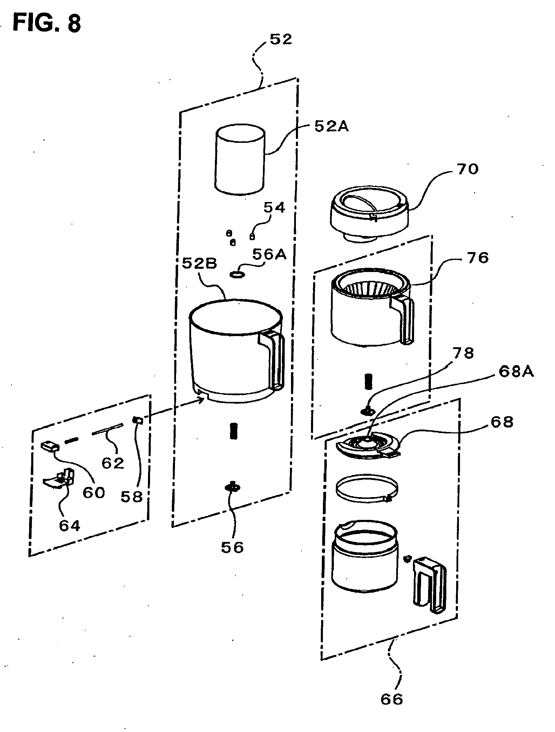

The cooling unit 52 is one that concentrically combines a bottomed cylindrical coffee liquid receptacle (coffee liquid accommodating part, extract liquid receptacle) 52A and a cooling reservoir 52B, the coffee liquid receptacle 52A being made of a thermally conductive metal such as aluminum. The bottom of the coffee liquid receptacle 52A is secured so as to be lifted above the cooling reservoir 52B by spacers 54 at three places (Figures 1 and 8). As a result, the cooling liquid also contacts the bottom surface of the coffee liquid receptacle 52A, and the coffee liquid cooling effect is enhanced.

In the cooling reservoir 52B, a sealed body 53, in which a thermally insulating material (cooling agent) that is a gelatinous fluid has been sealed, and another fluid (a fluid material) (such as water) are placed. In other words, a cooling material is placed inside the cooling reservoir 52B. For the sealed body 53, as shown in Figures 12A, 12B and 12C, one in which the gelatinous cooling agent is sealed in a flexible pouch (container) 53A that is made of a resin (see Figure 12A), one in which the gelatinous cooling agent is sealed in a spherical, inflexible sealed container 53B that is made of a resin or a metal (see Figure 12B), or one in which the gelatinous cooling agent is sealed in a polygonal sealed container 53C that is made of a resin or a metal (see Figure 12C), can be used. The sealed body 53 is placed "as is" and cooled in a refrigerator or the like prior to coffee extraction. Then, when coffee is to be extracted, the sealed body 53 is taken out of the refrigerator and used by placing it together with the other fluid in the cooling reservoir 52B. Thus, the sealed body 53 can be used repeatedly.

The center part of the bottom of the coffee liquid receptacle 52A sinks downward and adheres tightly to the cooling reservoir 52B, and a discharge valve 56 passes through the tightly adhering center part. To this discharge valve 56 is applied a downward-oriented return tendency, and the upper end of the discharge valve 56 normally closes the discharge hole in the coffee liquid receptacle 52A by a seal ring 56A (see Figures 1 and 8). The lower end of this discharge valve 56 is formed in a substantially inverted umbrella shape. When this inverted umbrella-shaped part is pushed up from the side by a valve opening/closing piece 58 capable of sliding in the horizontal direction (see Figures 8 and 9), the discharge valve 56 is thereby opened, allowing the coffee liquid to be discharged downward.

As seen from Figures 8 and 9, the valve opening/closing piece 58 is connected by a rod 62 to an operating piece (open/close button) 60 which is located near the outer circumference of the bottom of the cooling reservoir 52B, and it is mounted to the bottom of the cooling reservoir 52B by a cover 64. The operating piece 60, rod 62, and valve opening/closing piece 58 are imparted with a tendency to return to the outside (direction that closes the discharge valve 56) by a coil spring.

The cooling unit 52 is placed on the partition member 14 with the hot water receptacle 30 set on the iced coffee extraction funnel 50, with the stirring vanes 50A of the iced coffee extraction funnel 50 inserted in the coffee liquid receptacle 52A from above, and with the stirring rods 50B inserted in the cooling reservoir 52B from above, so that the whole of these are on the partition member 14. When the cooling unit 52 is placed on the partition member 14c, the circular seat 52C (see Figure 1) provided at the bottom of the cooling reservoir 52B is engaged with a circular hole 14A provided in the partition member 14; as a result, the cooling unit 52 is positionally stabilized. The reference numeral 52D is a handle of the cooling reservoir 52B.

A jug (vessel) 66 is mounted below the cooling unit 52 as shown in Figure 1. This jug 66 is placed on the round plate 32B of the heater 32 (see Figure 5) attached to the opening 12A in the base housing 12, with a thermally insulating mat in between. The cover 68 (or cover plate) 68 for the jug 66A is formed with a convexity 68A (see Figure 4) which is erected in the center of the cover 68, and a plurality of drip holes are formed in a ring-shaped channel surrounding the convexity 68A. As a result, if the operating piece 60 of the cooling unit 52 is pushed from the side to open the discharge valve 56, iced coffee liquid in the coffee liquid receptacle 52A flows down into the jug 66. Reference numeral 66A (see Figure 1) is a handle attached to the jug 66. The convexity 68A of the cover 68 shown in Figure 4 is for pushing up and opening the discharge valve 78 for a hot coffee extraction funnel 76 in the hot coffee extraction mode that will be described later.

In this condition, that is, in the iced coffee extraction mode, the hot water receptacle 30 is attached to the iced coffee extraction funnel 50, the stirring vanes 50A and the stirring rod 50B are inserted into the coffee liquid receptacle 52A and the cooling reservoir 52B of the cooling unit 52, and the whole thereof is mounted on the partition member 14. At that time, the sealed body 53 placed in the cooling reservoir 52B is cooled beforehand in a refrigerator or the like. Then, the integrated hot water receptacle 30 and funnel 50 are lifted up and the hub 30A of the hot water receptacle 30 is locked to the drive shaft 24 by the chuck 26. Accordingly, when the motor 22 is started, the hot water receptacle 30 and iced coffee extraction funnel 50 rotate as one unit together with the drive shaft 24. As a result, the stirring rods 50B are moved (rotated) along the wall of the coffee liquid receptacle (extract liquid receptacle) 52A.

If a paper filter and coffee powder (neither shown in the drawings) are set beforehand in the funnel 50, the heater 32 is made to generate heat, and hot water is poured in from the filter 40, then the hot water drips into the funnel 50 and is dispersed by the hot water receptacle 30, and the coffee liquid extracted accumulates in the coffee liquid receptacle 52A of the cooling unit 52. Sealed bodies 53 such as pouches (container) 53A or spheres 53B, or polygons 53C or the like, in which the thermally insulating material (cooling agent) is sealed, are placed beforehand in the cooling reservoir 52B; accordingly, the coffee liquid extracted is quickly cooled in the coffee liquid receptacle 52A. At that time, the stirring vanes 50A and the stirring rod 50B are also rotated together with the funnel 50, and the coffee liquid, the sealed bodies 53 and the other fluid (such as water) are stirred. Accordingly, the coffee liquid is cooled very efficiently.

When coffee extraction finishes, and the coffee liquid accumulated in the coffee liquid receptacle 52A of the cooling unit 52 has been sufficiently cooled by the cooling material, the motor 22 is stopped. When next the operating piece 60 of the discharge valve 56 is pushed from the side to open the discharge valve 56, chilled coffee liquid flows down into the jug 66. Then, the jug 66 is removed from the base housing 12, and the iced coffee therein is poured in a cup.

Next, the hot coffee extraction mode will be described, referring primarily to Figures 4, 5, 8, and 11.

In this hot coffee extraction mode, the scatter 70 is attached to the hot water receptacle 30. In other words, the scatter 70 is attached in place of the iced coffee extraction funnel 50 used in the above-described iced coffee extraction mode. In this scatter 70 are formed a deep concavity 72 at a position including the rotational center axis (centerline) A (see Figure 11) of the drive shaft 24 (see Figures 9 and 10) (through which the center axis A passes), and a shallow concavity 74 not at a position including the rotational center axis A (through which the center axis A does not pass). The bottoms of the two concavities 72 and 74 are continuous in a substantially stair shape as shown in Figure 11.

In the bottom of each of the concavities, a drip hole 72A and 74A, respectively, is formed. The positions R1 and R2 in the radial direction of the drip holes 72A and 74A relative to the rotational center axis A are set so that R1 < R2, and the hole diameter a of the drip hole 72A is smaller than the hole diameter b of the drip hole 74A (a < b).

The radial position R1 of the drip hole 72A is set so that, when coffee powder mainly for a small number of people (one or two people) is put in the funnel 76 described later, the hot water drips along the circle of comparatively narrow radius in the vicinity of the center. On the other hand, the radial position R2 of the drip hole 74A is set so that, when coffee powder for a medium or large number of people is put in the funnel 76, the hot water not only strikes coffee powder positioned near the center but also strikes coffee powder positioned apart from the center. The hole diameters a and b of the drip holes 72A and 74A are set so as to optimize the distribution of the hot water dripping from the drip holes 72 and 74, taking into consideration the differences in the depths from the liquid surface of the hot water accumulated in the scatter 70 (i.e. from the hot water surface).

The reference numeral 76 denotes a hot coffee extraction funnel. This funnel 76 can be locked in the hole 14A of the partition member 14. The locking structure is made, for example, so that an engagement projection provided on the funnel 76 is engaged in a hook-shaped channel formed in the inner circumferential surface of the hole 14A, and the funnel 76 is rotated slightly in the horizontal direction to lock the funnel 76. In the bottom of this funnel 76 is provided a discharge valve 78. The discharge valve 78 has a structure similar to that of the discharge valve 56 of the cooling unit 52 described above.

The discharge valve 78 has a tendency to return downward, and, while a seal ring attached to its upper end closes the discharge hole of the funnel 76, the lower end of the discharge valve 78 is formed in a substantially inverted umbrella shape. The discharge valve 78 opens the discharge hole when its inverted umbrella-shaped part is pushed up from below. When the jug 66 is set below the partition member 14 (on the base housing 12), the convexity 68A of the cover 68 of the jug 66 makes contact from below with the lower end of the discharge valve 78; and, due to the inclined surface of the convexity 68A, the cover 68 is pushed up and opens the discharge hole of the funnel 76 automatically. Hot coffee extraction is conducted with the jug 66 set in this condition. At this time, the funnel 76 is locked to the partition member 14, and thus the funnel 76 is pushed up by the jug 66 and will not ever float.

In the above-described hot coffee extraction mode, a paper filter and coffee powder are first set in the funnel 76, and the funnel 76 is next secured (locked) to the partition member 14. Then, when the heater 32 is made to emit heat, and boiling water is poured into the hot water receptacle 30, hot water enters the scatter 70. The hot water first enters the deep concavity 72, and drips from the drip hole 72A in the vicinity of the center of the funnel 76. Since the scatter 70 is rotated together with the drive shaft 24, dripping occurs on a small circle in the vicinity of the center of the funnel 76.

The volume of hot water flowing into the funnel 76 from the hot water receptacle 30 is set so that it is greater than the volume of drip from the drip hole 72A, so that the liquid surface (hot water surface) in the deep concavity 72 rises. When the liquid surface of the hot water rises and spreads to the shallow concavity 74, hot water begins to drip also from the drip hole 74A; and when the liquid surface rises further, hot water is dripped from both of the drip holes 72A and 74A.

As described above, the radial position R2 of the drip hole 74A is greater than the radial position R1 of the drip hole 72A. Accordingly, the hot water dripping from the drip hole 74A drips on a circle that is distant from the center of the funnel 76. As a result, hot water can be suitably dispersed and dripped onto the coffee powder inside the funnel 76. In this manner, it is possible to at first pour most of the hot water in the vicinity of the center of the funnel 76, and then, after the coffee powder has been suitably steamed, to have the hot water poured also nearer to the outer circumference and create optimal extraction conditions. It is thus possible to extract hot coffee which is highly fragrant and has good taste.

Furthermore, since there is a gap between the funnel 76 and the scatter 70 (see Figure 4), the operator is able to view the inside of the funnel 76 from this gap. In other words, the condition wherein foam is generated inside the funnel 76 can be verified. As a result, pleasure increases when extracting coffee.

Next, a control section 80 will be described with reference to Figures 5 and 9.

The control section 80 controls the heater 32 and the motor 22 based on the beverage type, hot or ice, and on the number of portions (number of cups) to be extracted, which are set by the input means 82. The input means 82 have switches 82A and 82B for inputting either hot (H) or ice (I), and a switch 82C for inputting how many cups (extraction quantity). The control section 80 determines hot or ice based on an ON input from either switch 82A or switch 82B, and it determines how many cups (extraction quantity) by the number of turning-on of switch 82C.

The control section 80 controls the volume of hot water poured in by changing the heating time with the heater 32 according to the extraction quantity. When heating for a time To for one person, for example, the heating time is made 2T₀ in case for two persons, and 3T₀ if it is for three persons. The control section may change the flow-out volume in response to the type, whether hot or ice. When it is desired to extract strong coffee for iced coffee, for example, then the flow-out volume is made less, so that the heating time is set shorter than when extracting hot coffee.

It can be set so that the control section 80 changes the hot water flow-out speed for hot or iced coffee. For iced coffee, for example, the flow-out speed is made slower in order to extract strongly. As a result, the temperature of the heater 32 is set lower than when extracting hot coffee. A temperature sensor 84 for detecting the heater temperature can be provided as shown in Figures 4 and 9, for example, so that the control section 80 performs feedback control in response to the heater temperature.

In the embodiment described above, selection can be made for a hot coffee extraction mode and an iced coffee extraction mode, but a part of the configuration used in this embodiment is applicable to a coffee maker so that it used exclusively in one of two modes. Using the scatter 70 attached to the drive shaft 24 at the top of the main body unit (in a manner that it is either detachable or undetachable), a coffee maker for extracting only hot coffee or a coffee maker for extracting only iced coffee can be made. In the latter case in which the coffee maker uses a scatter, an iced coffee extraction funnel is held in the main body unit; and as in the case of extracting hot coffee, hot water can be dispersed over the entire funnel, and it is possible to visually verify the situation inside the funnel during extraction.

The bottom of the scatter can be made in a conical shape so that the scatter is deep in the vicinity of the center, and it can also be made in a multi-step stair shape (including two steps or two or more steps) so that the scatter is deep in the vicinity of the center and it becomes shallower in steps toward the vicinity of the periphery. Either one or a plurality of drip holes is provided at positions thereof depth in the scatter.

When the scatter bottom is made in a stair shape, the liquid surface of the hot water will change (become lower) continuously, and the height of the drip holes provided in steps will change non-continuously, so that it is easy to adjust the relationship between the volume of hot water and the number of drip holes (for dripping hot water) used. Adjustment can be made, for example, so that only drip holes at deep positions in the vicinity of the center are used when extracting for one person, preventing hot water from dripping in the region where there is no coffee powder at the funnel periphery, or so that the hot water is dispersed and made to drip over a wide range out to the vicinity of the funnel periphery when extracting portions for many people.

The structure, in which steps 42B and 44B are formed, respectively, separately by a certain measure in the vertical direction in the water reservoir 42 and the water reservoir mounting chamber 44, is applicable to a dedicated coffee maker for extracting either hot coffee only or iced coffee only, with the above-described advantages.

Also, the above configuration for the water reservoir 42 and water reservoir mounting chamber 44 is applicable to water reservoirs or liquid reservoirs or the like used in small electric products other than coffee makers, such, for example, as interior humidifiers, or humidifiers provided in cosmetic equipment or heating equipment.

The configuration for controlling the hot water extraction volume according to the heating time with the heater 32 can also be applied to dedicated coffee makers for hot coffee or iced coffee. In such cases, the heater heating time can be monitored with a timer, and the structure will not become complex because the control section 80, formed by a microcomputer, already includes a timer.

Furthermore, the stirring vanes 50A and stirring rods 50B attached to the iced coffee extraction funnel are applicable to a dedicated coffee maker for iced coffee. As described in the foregoing, the configurations of the above-described embodiment are applicable to dedicated iced coffee makers and not only to coffee makers for both hot and iced coffee.

### Second embodiment

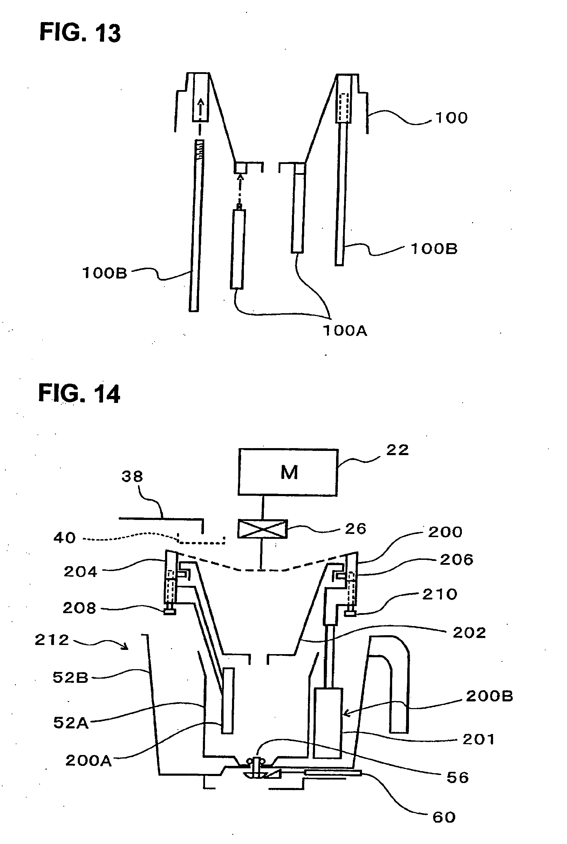

Figure 13 is a side view of the stirring vanes 100A and 100B of another embodiment of the present invention. In this embodiment, the stirring vanes 100A and 100B are made attachable and detachable to and from a funnel 100 which is similar to the funnel 50 of the first embodiment. More specifically, the stirring vanes 100A and 100B are provided at their upper ends with male screw threads, so that they are capable of being screwed into and fastened to the funnel 100 from below. These stirring vanes 100A and 100B correspond, respectively, to the stirring vanes 50A and 50B of the first embodiment and are for stirring the extract liquid and ice water.

### Third embodiment

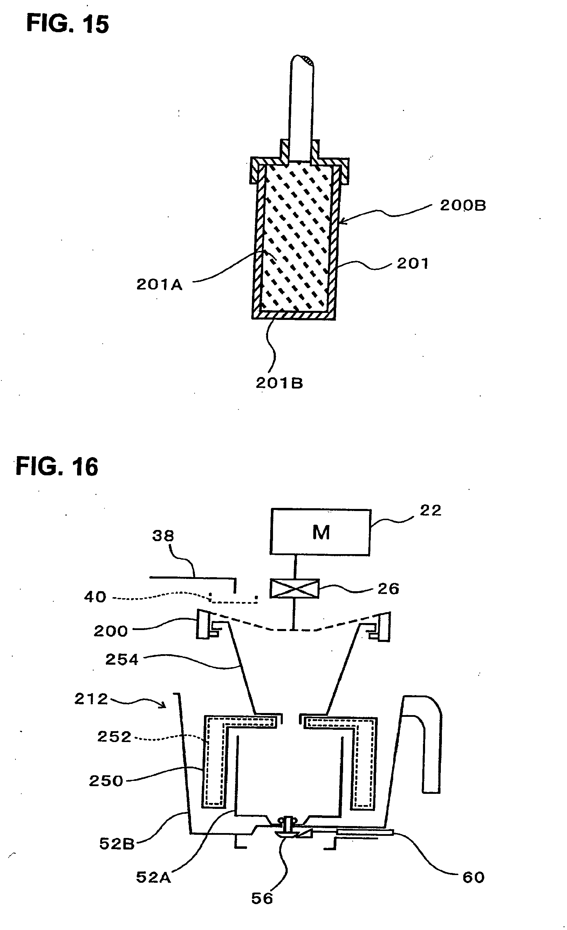

Figure 14 is a side view of the coffee maker of another embodiment of the present invention, and Figure 15 shows the cross-section of the stirring vane 200B.

In this embodiment, to the hot water receptacle 30 of the first embodiment, stirring vanes 200A and 200B for the extract liquid are detachably attached, and a thermally insulating material (cooling agent) is sealed in one stirring vane 200B or in both of the stirring vanes 200A and 200B, thus forming sealed bodies 201. In other words, the stirring vane 200B, as seen from Figure 15, has a cooling agent 201A sealed in a sealed container 201 B made of a resin or metal.

To the hot water receptacle 200 (corresponding to reference numeral 30 in Figure 1), an extraction funnel 202 (likewise corresponding to the reference numeral 50) is detachably attached from below. Downward projecting projections 204 and 206 are provided on the outside of the extraction funnel 202, and the upper ends of the stirring vanes 200A and 200B are detachably attached to the projections 204 and 206. The upper ends of the stirring vanes 200A and 200B are coupled by screws 208 and 210 that pass, upward from below, through upper end attachment parts of the stirring vanes 200A and 200B.

In Figure 14, the reference numeral 212 is a cooling unit, having the same structure as the cooling unit 52 in the first embodiment. Accordingly, in Figure 14, the same reference numerals are applied to the parts that are the same as in the first embodiment, and the descriptions thereof are omitted. Fourth embodiment

Figure 16 is a side view of the coffee maker of still another embodiment of the present invention.

In this embodiment, a thermally insulating material (cooling agent) 252 is sealed in stirring vanes 250, thus making the stirring vanes 250 sealed bodies; and a plurality of these stirring vanes 250 are integrated and made to be detachably attachable to a funnel 254.

In this embodiment, the integrated stirring vanes 250 are cooled and then attached to the funnel 254; accordingly, preparations for chilled beverage extraction become simple.

In Figure 16, since the same reference numerals are applied to the parts that are the same as in Figure 14, the descriptions thereof are omitted. Fifth embodiment

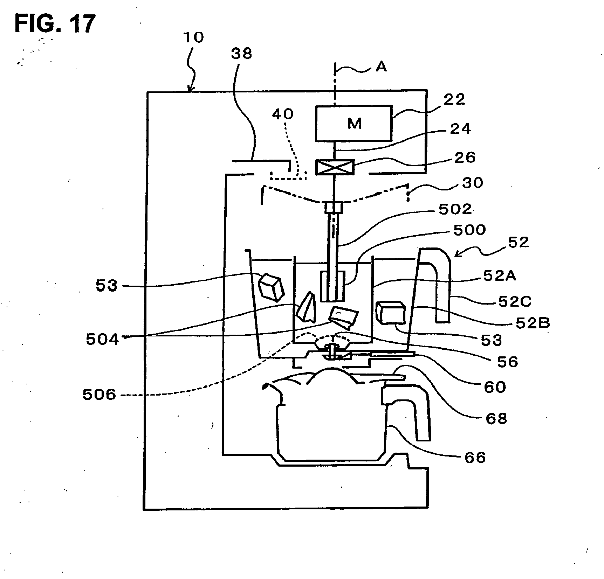

Figure 17 is a side view of the coffee maker of still another embodiment.

In this embodiment, black tea or green tea leaves or teabags are placed directly in the extract liquid receptacle, and hot water is poured thereon and stirred. In this case, the extract liquid receptacle is the beverage extraction means.

In Figure 17, the cooling unit 52, jug 66, and main body unit 10, among others, are the same as in the first embodiment, and putting the sealed body 53 and other fluid into the cooling reservoir 52B is also the same as in first embodiment. What is different from first embodiment is that no extraction funnel 50 is used and that a stirring vane 500 is attached to the hot water receptacle 30.

Accordingly, the same reference numerals are applied to the parts that are the same as in Figures 1 and 9 showing the first embodiment, and the descriptions thereof are omitted.

The stirring vane 500 is attached to the lower end of a rotating shaft 502 of which upper end is attached detachably in the center of the hot water receptacle 30. The rotating shaft 502 advances from above into the interior of the extract liquid receptacle 52A. Teabags 504 are placed beforehand inside the extract liquid receptacle 52A. Hot water passes through the hot water pipe 38 and filter 40 and is conducted by the hot water receptacle 30 to the vicinity of the center of the coffee maker, and then it flows from the vicinity of the center of the hot water receptacle 30, approaching to the rotating shaft 502, into the extract liquid receptacle 52A.

The hot water receptacle 30 and the stirring vane 500 preferably begin rotating after a certain volume of hot water has accumulated in the extract liquid receptacle 52A. However, it is possible that, by making the position of the stirring vane 500 sufficiently higher than the bottom surface of the extract liquid receptacle 52A, the hot water (extract liquid) contacts the stirring vane 500 after a certain volume of hot water has accumulated. In this case, the hot water receptacle 30 and stirring vane 500 can be rotated from the beginning.

Green tea leaves can be placed directly into the extract liquid receptacle 52A instead of teabags. In this case, it is preferable attach a filter 506 covering the discharge valve 56 to the bottom of the extract liquid receptacle 52A. With this filter 506, the green tea leaves can be prevented from clogging the discharge valve 56.

## Claims

1. A beverage maker comprising an extract liquid receptacle for storing therein extract liquid extracted by beverage extraction means and a cooling reservoir for accommodating cooling material that contacts said extract liquid with a tank wall of said extract liquid receptacle in between, so that said extract liquid is cooled by said cooling reservoir, wherein:
said cooling material is comprised of a sealed body, in which a cooling agent is sealed, and a fluid material, and
said sealed body, by itself, can be cooled and repeatedly used separately from said fluid material.

2. The beverage maker according to claim 1, wherein the sealed body is comprised of a gelatinous cooling agent sealed in a flexible container made of resin.

3. The beverage maker according to claim 1, wherein the sealed body is comprised of a gelatinous cooling agent sealed in an inflexible sealed container.

4. The beverage maker according to claim 1, wherein said beverage maker is provided with a stirring member for stirring the cooling material in said cooling reservoir.

5. The beverage maker according to claim 1, wherein said beverage maker is provided with a stirring member for stirring the extract liquid in said extract liquid receptacle.

6. The beverage maker according to claim 4 or 5, wherein said stirring member is moved in a circumferential direction along a wall of said extract liquid receptacle.

7. The beverage maker according to claim 4 or 5, wherein
said beverage extraction means is an extraction funnel that is rotationally driven, above said extract liquid receptacle, about a vertical line as a rotational center thereof; and
said stirring member, which is for stirring at least one of said cooling material inside said cooling reservoir and said extract liquid inside said extract liquid receptacle, is provided on said extraction funnel.

8. The beverage maker according to claim 5, wherein said stirring member is formed by a sealed body in which a cooling agent is sealed in a sealed container.

9. The beverage maker according to claim 6, wherein said stirring member is formed by a sealed body in which a cooling agent is sealed in a sealed container.

10. The beverage maker according to claim 7, wherein said stirring member is formed by a sealed body in which a cooling agent is sealed in a sealed container.
